# EUROPÄISCHE PATENTSCHRIFT

(11) **EP 1 028 218 B1**
(45) Veröffentlichungstag und Bekanntmachung des Hinweises auf die Patenterteilung: **07.09.2005**
(21) Anmeldenummer: 00102303.5
(22) Anmeldetag: 03.02.2000
(51) Int. Cl.: E06B 3/984, F16B 5/02, F16B 12/14

(54) **Vorrichtung zur Verbindung zweier Teile**
Device for assembling two elements
Dispositif pour assembler deux éléments

(30) Priorität: 12.02.1999 DE 29902485 U
(43) Veröffentlichungstag der Anmeldung: 16.08.2000
(73) Patentinhaber: Hachtel, Friedrich, 73431 Aalen (DE); Hachtel, Steffen, 73650 Winterbach (DE)
(72) Erfinder: Hachtel, Friedrich, 73431 Aalen (DE); Hachtel, Steffen, 73650 Winterbach (DE)
(74) Vertreter: Möbus, Daniela

(56) Entgegenhaltungen:
- BE-A- 721 915
- DE-A- 2 549 987
- DE-A- 3 142 432
- DE-A- 3 842 351
- US-A- 3 812 758
- US-A- 5 340 257

## Beschreibung

Bislang wurden Holzbauelemente wie beispielsweise Fensterflügel, Türen oder Rahmen mechanisch miteinander verbunden. Für diese Verbindung benutzt man seither vorzugsweise Bohrung-Zapfen-Konstruktionen, Nut- und Federkonstruktionen oder spezielle Profile. Gegebenenfalls werden diese Verbindungen mit einer Verleimung kombiniert.

Durch die Feuchtigkeitsaufnahme des Holzes kann dieses quellen, wodurch an den Verbindungsstellen Spalte entstehen, wenn nach dem Austrocknen des Holzes die Teile wieder ihr ursprüngliches Volumen annehmen. Diese Spalten an den Verbindungsstellen sind nicht nur unansehnlich, sondern auch bei Holzfenstern nachteilig bezüglich der Wärmedämmung und dem Eindringen von Feuchtigkeit.

Aus der DE 25 49 987 A1 ist eine Vorrichtung bekannt geworden, die einen Dübel aufweist, der in eine zwei Holzbauteile durchragende Bohrung eingesteckt werden kann. Der Dübel stützt sich über eine Auflagefläche an einem Gummiring ab, der auf einer Schulter der Bohrung aufliegt. Eine Schraube ist in den Dübel eindrehbar. Bei einer Schrumpfung des Holzes erübrigt sich daher ein Nachspannen der in den Dübel eingeschraubten Schraube.

Die vorliegende Erfindung hat die Aufgabe, dass sich durch die Quellung des Holzes entstandene Spalte nach dem Austrocknen des Holzes wieder zurückbilden.

Die Erfindung löst die gestellte Aufgabe mittels einer Vorrichtung zur Verbindung zweier Teile, insbesondere aus Holz, mit einem in eine sich über beide Holzteile erstreckende Bohrung eingesetzten Zapfen und einem daran anschließenden Dübel, wobei der Zapfen und der Dübel zur Aufnahme einer Schraube eine Bohrung aufweisen, und der Zapfen an seinem freien Ende ein sich außen am Rand der Bohrung abstützendes Federelement aufweist, wobei der Bohrungsrand am ersten Holzteil und der Dübel im zweiten Holzteil angeordnet ist. Das freie Ende des Zapfens ist kegelstumpfförmig und das Federelement einstückig mit dem Zapfen ausgebildet. Durch das sich am Rand der Bohrung abstützende Federelement der Verbindungsvorrichtung werden die durch das Verbindungselement miteinander verbundenen Teile nach dem Austrocknen des Holzes wieder zusammengezogen, wodurch der Spalt beseitigt wird.

Wegen seiner einfachen Ausführbarkeit als Spritzgussteil kann das Federelement beispielsweise eine Tellerfeder sein. Die Tellerfeder kann dabei so ausgebildet sein, dass das elastische Verhalten des Werkstoffs in idealer Weise ausgenützt wird.

Zapfen und Dübel können einteilig, aber auch zwei getrennte Teile sein.

Wegen seiner hohen Verankerungsfähigkeit und seiner Herstellbarkeit als Spritzgussteil kann der Dübel vorzugsweise ein Spreizdübel sein.

In den Dübeln und den Zapfen können Spax- oder Holzschrauben eingeschraubt sein, die im Holzbau ohnehin verwendet werden.

Vorteilhafterweise kann die Verbindungsvorrichtung aus einem teilkristallinen Thermoplast mit hohem elastischen Rückstellvermögen, wie beispielsweise POM oder PA 66, hergestellt sein.

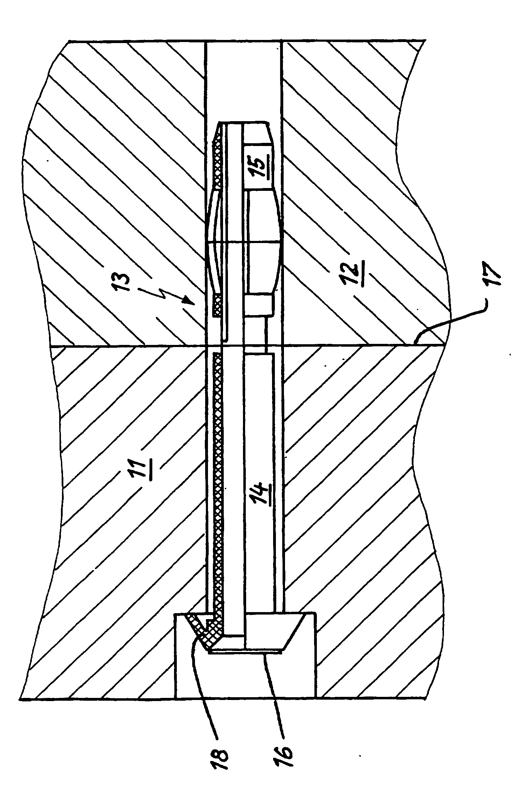

Nachfolgend wird ein Ausführungsbeispiel einer erfindungsgemäßen Vorrichtung zur Verbindung zweier Teile anhand der beiliegenden Zeichnung näher erläutert.

Die einzige Figur zeigt zwei miteinander zu verbindende Teile 11 und 12, beispielsweise zwei auf Gehrung gesägte Rahmenteile eines Holzfensters. Diese sind durch eine Vorrichtung 13 miteinander verbunden. Die Vorrichtung 13 weist einen Zapfen 15 und einen Dübel 15 auf, wobei der Dübel 15 vollständig im Teil 12 angeordnet ist. Der Zapfen 14 weist an seinem äußeren Ende ein Federelement 18 auf, das sich am äußeren Rand der Bohrung für die Vorrichtung 13 abstützt. Der Zapfen 14 und der Dübel 15 sind mittels einer Schraube 16, die vorzugsweise ein Spax- oder Holzschraube sein kann, miteinander verbunden.

Wenn nun die beiden Teile 11 und 12 infolge von Feuchtigkeitsaufnahme quellen, so entsteht an der Trennebene 17 zwischen den Teilen 11 und 12 ein Spalt, sobald sich die Holzteile beim Trocknen wieder zusammenziehen. Dieser Spalt in der Trennebene 17 wird jedoch mittels des Federelements 18, das hier als Tellerfeder ausgebildet ist, wieder zusammengezogen. Der Dübel 15, an dem die Vorrichtung 13 verankert ist, wirkt dabei als Gegenlager.

## Patentansprüche

1. Vorrichtung (13) zur Verbindung zweier Teile (11, 12), insbesondere aus Holz, mit einem in eine sich über beide Holzteile (11, 12) erstreckende Bohrung eingesetzte Zapfen (14) und einem daran anschließenden Dübel (15), wobei der Zapfen (14) und der Dübel (15) zur Aufnahme einer Schraube (16) eine Bohrung aufweisen und der Bohrungsrand am ersten Holzteil (11) und der Dübel (15) im zweiten Holzteil (12) angeordnet sind, wobei der Zapfen (14) an seinem freien Ende ein sich außen am Rand der Bohrung abstützendes Federelement (18) aufweist, **dadurch gekennzeichnet, dass** das freie Ende des Zapfens (14) kegelstumpfförmig ausgebildet ist und das Federelement (18) einstückig mit dem Zapfen (14) ausgebildet ist.

2. Vorrichtung (13) nach Anspruch 1, **dadurch gekennzeichnet, dass** das Federelement (18) eine Tellerfeder ist.

3. Vorrichtung (13) nach Anspruch 1 oder 2, **dadurch gekennzeichnet, dass** der Zapfen (14) und der Dübel (15) zwei getrennte Teile sind.

4. Vorrichtung (13) nach einem der Ansprüche 1 bis 3, **dadurch gekennzeichnet, dass** der Dübel (15) ein Spreizdübel ist.

5. Vorrichtung (13) nach einem der Ansprüche 1 bis 4, **dadurch gekennzeichnet, dass** eine Spax- oder Holzschraube in den Dübel (15) und den Zapfen (14) einschraubbar ist.

6. Vorrichtung (13) nach einem der Ansprüche 1 bis 5, **dadurch gekennzeichnet, dass** sie aus einem teilkristallinen Thermoplast mit hohem elastischen Rückstellvermögen, wie beispielsweise POM oder PA 66, hergestellt sind.

## Claims

1. Device (13) for connecting two parts (11, 12), in particular made of wood, having a peg (14) inserted into a bore extending over both wooden parts (11, 12) and a dowel (15) joined to said peg, whereby the peg (14) and the dowel (15) have a bore for accommodating a screw (16) and the bore edge is arranged on the first wooden part (11) and the dowel (15) is arranged in the second wooden part (12), whereby the peg (14) has a spring element (18) on its free end supported externally on the edge of the bore, **characterised in that** the free end of the peg (14) is designed with a truncated cone-shape and the spring element (18) is formed in one piece with the peg (14).

2. Device (13) according to claim 1, **characterised in that** the spring element (18) is a cup spring.

3. Device (13) according to claim 1 or 2, **characterised in that** the peg (14) and the dowel (15) are two separate parts.

4. Device (13) according to one of the claims 1 to 3; **characterised in that** the dowel (15) is an expansion dowel.

5. Device (13) according to one of the claims 1 to 4, **characterised in that** a Spax screw or a wood screw may be screwed into the dowel (15) and the peg (14).

6. Device (13) according to one of the claims 1 to 5, **characterised in that** it is manufactured from a partially crystalline thermoplastics material with a high elastic recovery capability, such as for instance POM or PA 66.

## Revendications

1. Dispositif (13) pour relier deux éléments (11, 12), en particulier en bois, avec un tenon (14) inséré dans un perçage s'étendant sur les deux éléments en bois (11, 12), ainsi qu'avec une cheville (15) s'y raccordant, le tenon (14) et la cheville (15) présentant un perçage pour recevoir une vis (16) et le bord du perçage étant disposé sur le premier élément en bois (11) et la cheville (15) dans le deuxième élément en bois (12), le tenon (14) présentant à son extrémité libre un élément de ressort (18) prenant appui à l'extérieur contre le bord du perçage, **caractérisé en ce que** l'extrémité libre du tenon (14) est réalisée en forme de tronc de cône et l'élément de ressort (18) est réalisé d'une seule pièce avec le tenon (14).

2. Dispositif (13) selon la revendication 1, **caractérisé en ce que** l'élément de ressort (18) est un ressort Belleville.

3. Dispositif (13) selon la revendication 1 ou 2, **caractérisé en ce que** le tenon (14) et la cheville (15) sont deux pièces séparées.

4. Dispositif (13) selon l'une des revendications 1 à 3, **caractérisé en ce que** la cheville (15) est une cheville à expansion.

5. Dispositif (13) selon l'une des revendications 1 à 4, **caractérisé en ce qu'**une vis Spax ou une vis à bois peut être vissée dans la cheville (15) et le tenon (14).

6. Dispositif (13) selon l'une des revendications 1 à 5, **caractérisé en ce qu'**il est fabriqué dans une matière thermoplastique en partie cristalline avec un grand pouvoir de rappel élastique, tel que par exemple en POM ou PA 66.
